(19) Europäisches Patentamt
European Patent Office
Office européen des brevets

(11) **EP 2 351 996 B1**

(12) **EUROPÄISCHE PATENTSCHRIFT**

(45) Veröffentlichungstag und Bekanntmachung des Hinweises auf die Patenterteilung:
**10.06.2020 Patentblatt 2020/24**

(51) Int Cl.:
*G01F 1/84* *(2006.01)*     *G01F 25/00* *(2006.01)*

(21) Anmeldenummer: **11000192.2**

(22) Anmeldetag: **12.01.2011**

(54) **Verfahren zur Ermittlung einer Kenngröße für die Korrektur von Messwerten eines Coriolis-Massedurchflussmessgeräts**

Method for determining a parameter for the correction of measurement values of a Coriolis mass throughput measuring device

Procédé d'établissement d'une grandeur de référence pour la correction de valeurs de mesure d'un appareil de mesure du débit massique de Coriolis

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2010 DE 102010006224**

(43) Veröffentlichungstag der Anmeldung:
**03.08.2011 Patentblatt 2011/31**

(73) Patentinhaber: **Krohne AG**
**4019 Basel (CH)**

(72) Erfinder:
• **Wang, Xue**
**Canterbury, Kent CT2 9DG (GB)**
• **Hussain, Yousif**
**Weston Favell**
**Northampton NN3 3DA (GB)**

(74) Vertreter: **Gesthuysen Patent- und Rechtsanwälte**
**Patentanwälte**
**Huyssenallee 100**
**45128 Essen (DE)**

(56) Entgegenhaltungen:
**US-A- 5 228 327**     **US-A- 5 239 456**
**US-A1- 2006 287 839**

• **JOHN ROBERT TAYLOR ED - JOHN ROBERT TAYLOR: "Statistical analysis of random uncertainties", 1. Januar 1982 (1982-01-01), AN INTRODUCTION TO ERROR ANALYSIS : THE STUDY OF UNCERTAINTIES IN PHYSICAL MEASUREMENTS / JOHN R. TAYLOR; [A SERIES OF BOOKS IN PHYSICS], MILL VALLEY, CALIF. : UNIV. SCIENCE BOOKS, US, PAGE(S) 81 - 98, XP008136455, ISBN: 0-935702-07-5 * Abschnitt 4.4 ***

EP 2 351 996 B1

## Beschreibung

Die Erfindung betrifft ein Verfahren zur Ermittlung mindestens einer Kenngröße für die Korrektur von Messwerten eines Coriolis-Massedurchflussmessgeräts, mit mindestens einem Messrohr, mindestens zwei Messwertaufnehmern und mindestens einem Aktuator, wobei das Messrohr mit dem Aktuator zu wenigstens einer Schwingung anregbar ist.

Coriolis-Massedurchflussmessgeräte der genannten Art sind seit langem bekannt und sind aufgrund ihres Messprinzips theoretisch unempfindlich gegenüber den Eigenschaften des Messmediums, wie z.B. Wärmeleitfähigkeit, Wärmekapazität und Viskosität. Sie messen den Massendurchfluss direkt, indem sie eine vom Massedurchfluss beeinflusste mechanische Schwingung des Messrohrs auswerten.

Allerdings wird in der kommerziellen Anwendung insbesondere bei Coriolis-Massedurchflussmessgeräten mit einem einzigen geraden Messrohr häufig das Problem einer Änderung von Nullpunkt und Empfindlichkeit im laufenden Betrieb beobachtet. Diese Änderung ist insbesondere auf die Kopplung des Schwingungssystems mit seiner Umgebung zurückzuführen. Eine Änderung der Umgebungsbedingungen führt zu einer Veränderung der charakteristischen Eigenschaften des Messsystems. Daher müssen sowohl Nullpunkt als auch Empfindlichkeit unter Berücksichtigung der aktuellen Betriebs- und Einbaubedingungen korrigiert werden, um eine geforderte hohe Messgenauigkeit gewährleisten zu können.

Das zentrale Element von Coriolis-Massedurchflussmessgeräten ist das Messrohr, das von dem Medium durchströmt wird, dessen Masse zu erfassen ist. Coriolis-Massedurchflussmessgeräte mit mehreren Messrohren - gerade oder gekrümmt - sind ebenfalls bekannt. Zur Vereinfachung ist im Folgenden von einem Messrohr die Rede, die Ausführungen gelten jedoch ohne Einschränkung auch für Coriolis-Massedurchflussmessgeräte mit mehreren Messrohren. Das Messrohr ist an beiden Enden starr verankert und wird beispielsweise durch einen elektromagnetischen Aktuator zu einer Schwingung in seiner ersten Eigenform in Resonanz angeregt. Die Erfassung der Messrohrschwingung erfolgt häufig über zwei elektromagnetische Sensoren. Ohne Massedurchfluss schwingen beide Messrohrhälften im Idealfall synchron. Sobald ein Massedurchfluss durch das Messrohr erfolgt, werden durch die zueinander orthogonalen Geschwindigkeiten der Bewegung des Messrohrs einerseits und der Bewegung der Masseteilchen im Messrohr andererseits Coriolis-Kräfte hervorgerufen. Diese sind auf der einströmenden und ausströmenden Seite des Messrohrs entgegengesetzt zueinander orientiert, so dass die Schwingung der Messrohrhälfte auf der Einströmseite in Bezug auf die Bewegung der Schwingung der Messrohrhälfte auf der Ausströmseite voreilt.

Die bei Massefluss auftretende Phasenverschiebung der Schwingung des Messrohrs, die sich letztendlich in einer Zeitverzögerung der Schwingungen zwischen den beiden Messrohrhälften äußert, ist proportional zum Massedurchfluss und wird daher zur Bildung des Messwertes herangezogen. Insbesondere deshalb ist eine genaue Kenntnis der Schwingungseigenschaften des Messsystems, vor allem der ersten Eigenform bei Nulldurchfluss notwendig. In dem vorgenannten Sinne ist die Phasendifferenz zwischen den Schwingungen der Messrohrhälften - oder anderen Bereichen des Messrohrs, das kann von der Eigenform abhängen, in der das Messrohr angeregt wird - eine Messgröße, wenn auch eine aus den erfassten Auslenkungen des Messrohrs abgeleitete Messgröße. Coriolis-Massedurchflussmessgeräte zeigen in der Praxis häufig eine von Null verschiedene Phasendifferenz auch bei Null-Durchfluss, weichen mithin von dem theoretischen Verhalten ab. Für die Gewährleistung einer bestimmten Messgenauigkeit ist deshalb in der Praxis insbesondere die Kenntnis dieses Nullpunkt-Offset der Phase von Interesse.

Im Stand der Technik wird beispielsweise die aus der Phasendifferenz der Schwingungen resultierende Zeitdifferenz zwischen den beiden Messwertaufnehmern ermittelt und aus den ermittelten Werten ein Mittelwert berechnet, der für die Korrektur der Messwerte herangezogen wird. Die aus dem Stand der Technik bekannten Verfahren zur Ermittlung der Kenngrößen zur Korrektur der Messwerte des Coriolis-Massedurchflussmessgeräts sind allerdings anfällig für Fehler und häufig wenig exakt, weshalb sie zu Ungenauigkeiten auch bei den bereits korrigierten Messwerten des Coriolis-Massedurchflussmessgeräts führen.

Aus der Druckschrift US 2006/0287839 A1 ist ein Coriolis-Massedurchflussmessgerät der oben beschriebenen Art bekannt, bei welchem ein Nullpunktfehler eines Durchflusses mit einem Mittelwert von Durchflussmessungen bei Nulldurchfluss korrigiert wird. Gemäß der Druckschrift US 5,228,327 wird zusätzlich eine Standardabweichung der Durchflussmessungen als Konvergenzkriterium bestimmt.

Ausgehend von dem vorgenannten Stand der Technik soll ein Verfahren zur Ermittlung mindestens einer Kenngröße für die Korrektur von Messwerten eines Coriolis-Massedurchflussmessgeräts angegeben werden, das sich durch eine gesteigerte Genauigkeit und geringe Fehleranfälligkeit bei der Ermittlung der Kenngröße auszeichnet.

Die vorgenannte Aufgabe ist bei einem Verfahren zur Ermittlung mindestens einer Kenngröße für die Korrektur von Messwerten eines Coriolis-Massedurchflussmessgeräts mit mindestens einem Messrohr, mindestens zwei Messwertaufnehmern und mindestens einem Aktuator, wobei das Messrohr mit dem Aktuator zu wenigstens einer Schwingung anregbar ist, gelöst, indem folgende Verfahrensschritte umfasst sind:

- Erfassen von Werten einer Messgröße bei konstantem Durchfluss mit den Messwertaufnehmern,

- Berechnen mindestens eines Lageparameters aus den erfassten Werten, wobei der Lageparameter ein Mittelwert ist,

- Berechnen mindestens eines Streuungsparameters aus den erfassten Werten und dem Lageparameter, wobei der Streuungsparameter der Standardfehler des Mittelwerts ist.

- wobei das Erfassen zusätzlicher Werte und das Berechnen von Lageparameter und Streuungsparameter aus den vorhandenen und zusätzlichen Werten so häufig durchgeführt wird, bis der Streuungsparameter als Auswahlkriterium einen Schwellenwert unterschreitet, und

- wobei dann der zu dem Streuungsparameter korrespondierende Lageparameter als Kenngröße für die Korrektur der Messwerte des Coriolis-Massedurchflussmessgeräts herangezogen wird.

Zur Ermittlung des für die Korrektur von Messwerten eines Coriolis-Massedurchflussmessgeräts benötigte Kenngröße wird folglich zunächst das Messrohr mit dem Aktuator zu wenigstens einer Schwingung angeregt und der Durchfluss auf einem konstanten Wert gehalten, so dass Messwerte mittels der beiden Messwertaufnehmer, die beispielsweise an dem Messrohr befestigt sind, aufgenommen werden können. Aus den erfassten Messwerten - Auslenkungen des Messrohrs und ggf. daraus abgeleitete Messgrößen - wird nachfolgend mindestens ein Lageparameter berechnet, der die Lage aller bisher ermittelten Werte, also der Elemente einer Grundgesamtheit, in Bezug auf eine Messskala beschreibt.

Anschließend wird aus den erfassten Werten und dem berechneten Lageparameter mindestens ein Streuungsparameter berechnet, wobei der Streuungsparameter als statistische Kennziffer zu verstehen ist, durch deren Ermittlung sich Aussagen über die Verteilung der Werte um den Lageparameter treffen lassen. Der Streuungsparameter ist folglich eine Maßzahl für die Güte des ermittelten Lageparameters. Je mehr Werte es gibt, desto robuster ist der Lageparameter und desto geringer ist beispielsweise der Wert des Streuungsparameters.

Das Erfassen zusätzlicher Werte und das Berechnen von Lageparameter und Streuungsparameter aus den vorhandenen und zusätzlichen Werten wird so häufig durchgeführt, bis der Streuungsparameter als Auswahlkriterium einen Schwellenwert unterschreitet, so dass anschließend der zu dem Streuungsparameter, der den Schwellenwert unterschritten hat, gehörende Lageparameter als Kenngröße für die Korrektur der Messwerte des Coriolis-Massedurchflussmessgeräts herangezogen wird. Dabei werden die Parameter - Lageparameter und Streuungsparameter - bei jeder neuen Berechnung stets aus der kumulierten Grundgesamtheit aller bisher ermittelten Werte mit den jeweils neu dazugekommenen Werten berechnet, so dass der Lageparameter und auch der Streuungsparameter mit neu hinzugekommenen Werten stets neu zu berechnen ist.

Diese Iteration wird unterbrochen, wenn der Streuungsparameter als Auswahlkriterium einen Schwellenwert unterschreitet, der beispielsweise zu Beginn von einem Verwender vorgegeben worden ist. Sobald der Streuungsparameter dem vorgegebenen Schwellenwert genügt, kann der zu diesem Streuungsparameter gehörenden Lageparameter als Kenngröße für die Korrektur der Messwerte eines Coriolis-Massedurchflussmessgeräts herangezogen werden. Je nach Betriebs- und Einbausituation des Coriolis-Massedurchflussmessgeräts wird folglich die Dauer des erfindungsgemäßen Verfahrens an die tatsächlichen Gegebenheiten angepasst, was bedeutet, dass., wenn bereits mit wenigen Werten ein durch den Streuungsparameter als zuverlässig bewerteter Lageparameter ermittelt worden ist, das Verfahren bereits frühzeitig beendet werden kann. Dadurch wird vermieden, dass das Verfahren unnötig Lange durchgeführt wird, obwohl bereits ein ausreichend genauer Lageparameter vorliegt. Auf der anderen Seite kann es natürlich sein, dass die individuelle Betriebs- und Einbausituation das Erfassen von sehr vielen Werten notwendig macht, bevor ein mit dem Streuungsparameter als ausreichend genau bewerteter Lageparameter ermittelt worden ist.

Bei dem Mittelwert kann es sich beispielsweise um einen arithmetischen, einen geometrischen oder einen harmonischen Mittelwert handeln. Der Mittelwert wird aus der kumulierten Gesamtheit der bis zu dem Berechnungszeitpunkt erfassten Werte berechnet. Zur Bewertung des Lageparameters bzw. des Mittelwerts wird anschließend - wie bereits beschrieben - ein Streuungsparameter berechnet. Der Standardfehler ist ein Streuungsmaß für eine Stichprobenverteilung, hier ein Streuungsmaß für die Gesamtheit der durch die Messwertaufnehmer ermittelten Werte. Der Standardfehler ist definiert als die Standardabweichung des Lageparameters, folglich beispielsweise des Mittelwerts. Der Standardfehler wird als die Wurzel aus der Varianz der Verteilung der Stichprobenmittelwerte von gleichgroßen unabhängigen zufälligen Stichproben ermittelt. Der Standardfehler $s_{\bar{t}_0}$ eines Mittelwerts $\bar{t}_0$ errechnet sich nach folgendem Zusammenhang, wobei N die Anzahl an Werten und $s_{t_0}$ die Standardabweichung ist:

$$S_{\bar{t}_0} = \frac{s_{\bar{t}_0}}{\sqrt{(N)}}.$$ (Gl. 1)

Die Standardabweichung ist dabei wie folgt definiert:

$$s_{\bar{t}_0} = \sqrt{\frac{1}{N-1}\sum_{i=1}^{N}(\Delta t_{0i} - \bar{t}_0)^2},$$ (Gl. 2)

wobei die Werte $\Delta t_{0i}$ jeweils die Differenz der durch die beiden Messwertaufnehmer ermittelten Werte darstellen.

Gemäß einer bevorzugten Weiterbildung ist vorgesehen, dass die Messgröße eine Zeitdifferenz ist, insbesondere eine erfasste Zeitdifferenz zwischen den mit den beiden Messwertaufnehmern erfassten Schwingungen des Messrohrs, beispielsweise die Zeitpunkte der Maximalauslenkungen der jeweiligen Messrohrabschnitte. Durch die beiden Messwertaufnehmer wird die Schwingung des durch den Aktuator zu einer Schwingung angeregten Messrohrs erfasst. Die Messwertaufnehmer erfassen eine Phasendifferenz der Schwingungen an den Orten der beiden Messwertaufnehmer. Diese Phasenverschiebung der Schwingung verschiedener Abschnitte des Messrohrs entspricht einer Zeitdifferenz zwischen dem Erreichen korrespondierender Auslenkungen - insbesondere dem Erreichen prägnanter Maximalauslenkungen - der verschiedenen von den Messwertaufnehmern beobachteten Messrohrabschnitte, die als Wert $\Delta t_0$ erfassbar ist.

Neben der Ermittlung des Kennwertes für die Korrektur der Durchfluss-Messwerte des Coriolis-Massedurchflussmessgeräts eignet sich das Verfahren im allgemeinen auch zur Diagnose des Coriolis-Massedurchflussmessgeräts, so dass beispielsweise durch Speicherung aller berechneten Mittelwerte ein langfristige Tendenz, also das Verhalten des Mittelwerts, speicherbar ist. Aus dieser Dokumentation des langfristigen zeitlichen Verlaufs des Mittelwerts lassen sich Rückschlüsse auf eine mögliche Veränderung der Betriebs- bzw. der Einbausituation des Coriolis-Massedurchflussmessgeräts ziehen. Wenn beispielsweise der Mittelwert aus einem mittelfristig stabilen Wertbereich in eine positive oder in eine negative Richtung abdriftet, lässt sich die Veränderung detektieren. Ferner kann eine enorm hohe benötigte Anzahl an Werten zur Erreichung des vorgegebenen Schwellenwerts bei der Berechnung des Streuungsparameters ein Anzeichen für eine Veränderung des Coriolis-Massedurchflussmessgeräts sein, die zur Gewährleistung einer hohen Messgenauigkeit näher untersucht werden sollte.

Das Unterschreiten des Schwellenwerts durch den Standardfehler ist dabei das Auswahlkriterium für die Lageparameter, wobei durch das Unterschreiten eine ausreichende Genauigkeit bestätigt wird, wodurch sich der Lageparameter dann als Kenngröße zur Korrektur von Messwerten eines Coriolis-Massedurchflussmessgeräts eignet. Mit zunehmender Anzahl an Werten steigt im allgemeinen die Güte des Lageparameters, hier insbesondere des Mittelwertes, an, was insgesamt bedeutet, dass der Standardfehler geringer wird, wodurch eine ausreichende Güte angezeigt ist, wenn der - durch den Verwender - vorgegebene Schwellenwert unterschritten ist.

Gemäß einer weiteren, ganz besonders vorteilhaften Ausgestaltung ist vorgesehen, dass der konstante Durchfluss ein Nulldurchfluss ist. Im Idealfall sollte die Zeitdifferenz zwischen den beiden Messwertaufnehmern bei einer Schwingung des Messrohres ohne Durchfluss gleich Null sein, nämlich keine Zeitdifferenz bzw. Phasendifferenz vorliegen. Durch die Betriebs- und Einbausituation, aber auch durch bereits im Herstellungsverfahren begründete Abweichungen, kann auch bei Nulldurchfluss eine Zeitdifferenz vorliegen, die dann - unter der Voraussetzung ihrer Kenntnis - zur Korrektur der Messwerte eines Coriolis-Massedurchflussmessgeräts herangezogen wird. Um diesen Offset genau zu bestimmen, werden die Verfahrensschritte an einem schwingenden Messrohr ohne Durchfluss durchgeführt, so dass die durch die Betriebs- und Einbausituation bedingte Zeitdifferenz bei der Korrektur bzw. der Bestimmung der Messwerte aus der erfassten Schwingung aus den Messwerten des Coriolis-Massedurchflussmessgeräts rechnerisch entfernt werden kann.

Um dem Verfahren eine beschränkende Bedingung zu geben, so dass das Verfahren beispielsweise nicht unendlich lange durchgeführt wird, wenn der Schwellenwert nicht erreicht wird, ist vorgesehen, dass eine maximale Anzahl von Iterationsschritten des Verfahrens vorgegeben ist, insbesondere die Anzahl an Iterationsschritten durch eine maximale Anzahl an Messwerten beschränkt ist. So kann vor Beginn des Verfahrens eine sinnvolle maximale Anzahl an Iterationsschritten vorgegeben werden, nach deren Ablauf die Durchführung des Verfahrens beendet wird, auch wenn der Streuungsparameter den Schwellenwert noch nicht erreicht hat. Für diesen Fall wird dann der zuletzt ermittelte Lageparameter als Kenngröße zur Korrektur der Messwerte herangezogen. Als Maßzahl für die Beschränkung der Anzahl an Iterationsschritten des Verfahrens eignet sich insbesondere auch die Anzahl an ermittelten Messwerten, so dass beispielsweise bei einer sinnvollen Maximalanzahl an erfassten Werten das Verfahren beendet wird und wiederum der zuletzt ermittelte Lageparameter als Kenngröße herangezogen wird.

Dabei kann es nicht nur vorkommen, dass das Verfahren durch Nichterreichung des Schwellenwerts unbegrenzt lange dauert, sondern auch, dass das Verfahren aufgrund des Erreichens des Schwellenwertes mit einer sehr geringen Anzahl an Messwerten nach einer sehr kurzen Dauer oder nach sehr wenigen Iterationsschritten beendet wird, so dass sich als vorteilhaft herausgestellt hat, wenn eine minimale Anzahl an Iterationsschritten des Verfahrens vorgegeben ist, insbesondere die Anzahl von Iterationsschritten durch eine minimale Anzahl an Messwerten beschränkt ist. So kann beispielsweise eine minimale Anzahl an Iterationsschritten vorgegeben werden, die mindestens durchgeführt werden müssen, bevor das Verfahren beendet werden darf, auch wenn der Streuungsparameter bereits vorher den Schwellenwert erreicht hat. Auch hier eignet sich die Anzahl an Messgrößen als Bezugsgröße zur Begrenzung der Iterationsschritte.

Um zumindest ein zusätzliches Kriterium für die Bewertung der Güte des Lageparameters zu erhalten, ist gemäß einer vorteilhaften Ausgestaltung vorgesehen, dass zusätzlich ein Berechnen der Schiefe der Messwerte erfolgt, wobei die Schiefe ein Maß für die Häufigkeit der positiven oder negativen Abweichung der Gesamtheit der Werte vom Lageparameter ist. Ganz allgemein beschreibt die Schiefe die Neigungsstärke einer statistischen Verteilung und ist ein Maß für die Symmetrie der Wahrscheinlichkeitsverteilung zum Mittelwert. Die Gaußsche-Normalverteilung hat beispielsweise die Schiefe Null. Aus der Schiefe können auch Rückschlüsse für eine Diagnose des Betriebszustandes des Coriolis-Massedurchflussmessgeräts geschlossen werden, da eine gleichbleibende Schiefe beispielsweise auf eine wesentlichen Beeinflussung der Messwerte durch den Betriebszustand des Coriolis-Massedurchflussmessgeräts hinweist, der in Folge dieses Hinweises näher untersucht werden sollte. Auch bei der Korrektur der ermittelten Messwerte kann die Kenntnis der Schiefe herangezogen werden. Die Schiefe berechnet sich wie folgt:

$$g_{1t_0} = \frac{\dfrac{1}{N}\sum\limits_{i=1}^{N}\left(\Delta t_{0i} - \bar{t}_0\right)^3}{\left(\dfrac{1}{N}\sum\limits_{i=1}^{N}\left(\Delta t_{0i} - \bar{t}_0\right)^2\right)^{3/2}}. \qquad (Gl.\ 3)$$

Neben der Schiefe ist ein Berechnen eines zusätzlichen statistischen Kennwerts vorgesehen, nämlich ein Berechnen der Wölbung der Messwerte, wobei die Wölbung ein Maß für die Abweichung der Gesamtheit der Werte von der Normalverteilung ist. Die Wölbung beschreibt die Neigung der Flanken der Wahrscheinlichkeitsdichtefunktion. Ein sehr hoher Wert der Wölbung gibt an, dass es sich um eine Verteilung mit sehr steilen Flanken, also um einen sehr spitzen Kurvenverlauf handelt. Die Wölbung berechnet sich wie folgt:

$$'_{2t_0} = \frac{\dfrac{1}{N}\sum\limits_{i=1}^{N}\left(\Delta t_{0i} - \bar{t}_0\right)^4}{\left(\dfrac{1}{N}\sum\limits_{i=1}^{N}\left(\Delta t_{0i} - \bar{t}_0\right)^2\right)^2} - 3. \qquad (Gl.\ 4)$$

Damit die zusätzlich berechneten statistischen Kennwerte im Rahmen der Korrektur der Messwerte eines Coriolis-Massedurchflussmessgeräts einen Einfluss liefern können, ist vorgesehen, dass als Auswahlkriterium für die Kenngröße zusätzlich die Schiefe und/oder die Wölbung herangezogen werden. Neben beispielsweise dem Standardfehler des Mittelwerts wird der Lageparameter dadurch zusätzlich durch mindestens eine zweite statistische Kennzahl bewertet, so dass die Korrektur der Messwerte eines Coriolis-Massedurchflussmessgeräts mit einer sehr hohen Genauigkeit erfolgen kann.

Im Einzelnen gibt es nun eine Vielzahl von Möglichkeiten, das erfindungsgemäße Verfahren auszugestalten und weiterzubilden. Dazu wird verwiesen auf die dem Patentanspruch 1 nachgeordneten Patentansprüche sowie auf die Beschreibung von bevorzugten Ausführungsbeispielen in Verbindung mit der Zeichnung. In der Zeichnung zeigen:

Fig. 1     ein Ablaufdiagramm für ein erstes Ausführungsbeispiel eines Verfahrens,

Fig. 2     ein Ablaufdiagramm für ein zweites Ausführungsbeispiel eines Ver-fahrens,

Fig. 3     ein Diagramm eines beispielhaften Verlaufs des Standardfehlers, aufgetragen über der Probenanzahl für vier verschiedene Betriebsbedingungen und

Fig. 4    ein weiteres Ausführungsbeispiel eines Ablaufdiagramms für ein Verfahren.

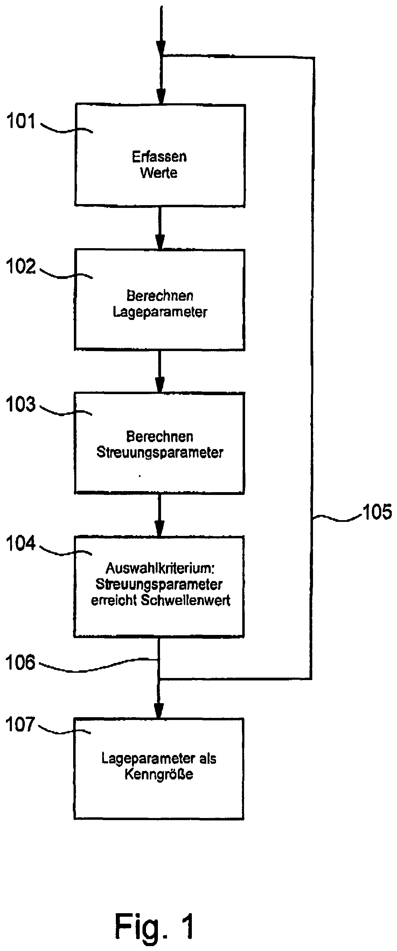

Fig. 1 zeigt ein erstes Ablaufdiagramm für ein Ausführungsbeispiel eines ersten Verfahrens zur Ermittlung mindestens einer Kenngröße für die Korrektur von Messwerten eines Coriolis-Massedurchflussmessgeräts, mit mindestens einem Messrohr, mindestens zwei Messwertaufnehmern und mindestens einem Aktuator, wobei das Messrohr mit dem Aktuator zu wenigstens einer Schwingung anregbar ist. Als erster Verfahrensschritt erfolgt zunächst das Erfassen von Werten 101, indem mit den Messwertaufnehmern die Werte einer Messgröße bei konstantem Durchfluss in dem Messrohr des Coriolis-Massedurchflussmessgeräts erfasst werden. Anschließend erfolgt - als zweiter Verfahrensschritt - ein Berechnen eines Lageparameters 102 mit den ermittelten Werten. Der Lageparameter beschreibt die Lage der Gesamtheit der ermittelten Werte in Bezug auf eine Messskala und gibt somit eine zentrale Tendenz der Verteilung an.
Aus den erfassten Werten und dem berechneten Lageparameter erfolgt nachfolgend ein Berechnen eines Streuungsparameters 103, wobei der Streuungsparameter eine Aussage über die Verteilung der erfassten Werte um den berechneten Lageparameter macht. Der Streuungsparameter ist insoweit eine Maßzahl für die Güte des Lageparameters. Anhand des Auswahlkriteriums, ob der berechnete Streuungsparameter einen vorgegebenen Schwellenwert erreicht 104 wird anschließend überprüft, ob der mit dem Streuungsparameter bewertbare Lageparameter eine ausreichende Güte aufweist. Der Schwellenwert wird durch den Verwender vorgegeben und spiegelt somit die gewünschte Genauigkeit der Messwertkorrektur wider.
Für den Fall, dass der berechnete Streuungsparameter den Schwellenwert nicht erreicht, erfolgt der Ablauf des Verfahrens entlang eines ersten Pfades 105 in Fig. 1, nämlich mit dem erneuten Erfassen von Werten 101 mit den Messwertaufnehmern des Coriolis-Massedurchflussmessgeräts. Das Erfassen von zusätzlichen Werten und das erneute Berechnen des Lageparameters und des Streuungsparameters wird so häufig durchgeführt, bis als Auswahlkriterium bzw. als Kriterium zur Beendigung des Verfahrens der Streuungsparameter einen Schwellenwert erreicht hat. Dabei erfolgt das Erfassen von Werten 101 derart, dass die neu und zusätzlich erfassten Werte zu den bisher erfassten Werten hinzugefügt werden, so dass das Berechnen des Lageparameters 102 und das Berechnen des Streuungsparameters 103 stets mit der Gesamtheit der mit den Messwertaufnehmern erfassten Werte erfolgt.
Wenn als Auswahlkriterium der Streuungsparameter den Schwellenwert erreicht 104, also die Güte des Lageparameters den Vorgaben des Verwenders genügt, dann wird das Verfahren entlang eines zweiten Pfades 106 fortgeführt, so dass abschließend der zu dem das Auswahlkriterium - Streuungsparameter erreicht Schwellenwert - erfüllende Streuungsparameter gehörende Lageparameter als Kenngröße 107 herangezogen wird. Mit dem als Kenngröße herangezogenen Lageparameter können nachfolgend die Messwerte des für die Erfassung herangezogenen Coriolis-Massedurchflussmessgeräts verwendet werden. Durch die Beurteilung der Güte des Lageparameters anhand des Streuungsparameters werden somit gerade genau so viele Werte für die Ermittlung des Lageparameters herangezogen und erfasst, wie für eine ausreichend genaue Bestimmung des Lageparameters notwendig sind, so dass die Ermittlung der Kenngröße stets mit einer optimalen Anzahl an Werten erfolgt. Zusätzlich werden durch die Bewertung des Lageparameters temporäre und außergewöhnliche Ereignisse, die die Lage des Lageparameters beeinflussen könnten, mit dem Verfahren herausgefiltert. Das Verfahren zur Ermittlung der Kenngröße passt sich somit adaptiv an die jeweilige Betriebs- und Einbausituation des Coriolis-Massedurchflussmessgeräts an.

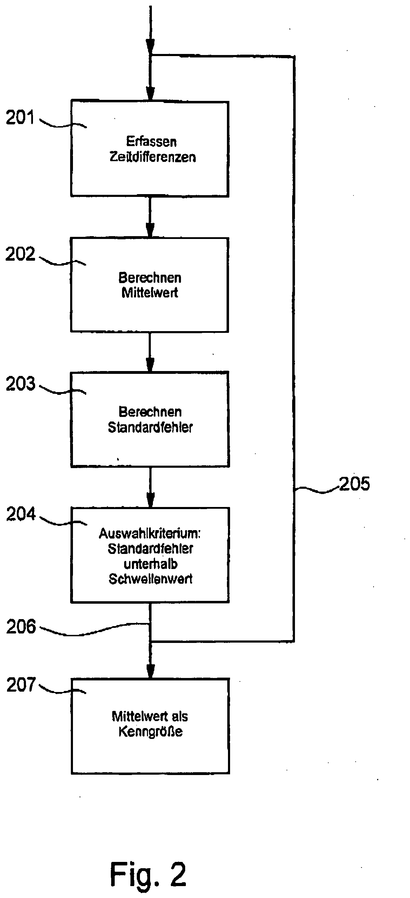

Fig. 2 zeigt ein Ablaufdiagramm für ein zweites Ausführungsbeispiel eines Verfahrens zur Ermittlung mindestens einer Kenngröße für die Korrektur von Messwerten eines Coriolis-Massedurchflussmessgeräts, mit mindestens einem Messrohr, mindestens zwei Messwertaufnehmern und mindestens einem Aktuator, wobei das Messrohr mit dem Aktuator zu wenigstens einer Schwingung anregbar ist. Als erster Verfahrensschritt erfolgt das Erfassen von Zeitdifferenzen 201. Bei diesen Zeitdifferenzen handelt es sich um Zeitdifferenzen, die aus einer Phasenverschiebung der Schwingung verschiedener Bereiche des Messrohrs resultieren und durch die beiden Messwertaufnehmer detektiert werden bzw. aus den Messsignalen der Messwertaufnehmer ermittelt werden können. Während des Erfassens der Zeitdifferenzen durch die beiden Messwertaufnehmer befindet sich im Messrohr ein konstanter Durchfluss, in diesem Fall ein Nulldurchfluss.
Mit den erfassten Zeitdifferenzen erfolgt anschließend ein Berechnen des Mittelwerts 202 der Zeitdifferenzen, wobei es sich dabei um einen arithmetischen Mittelwert handelt. Anschließend erfolgt mit dem Mittelwert und den ermittelten Zeitdifferenzen das Berechnen des Standardfehlers 203 des Mittelwerts, so dass sich die Güte des Mittelwerts anhand des Standardfehlers beurteilen lässt. Anhand des Auswahlkriteriums, ob der Standardfehler einen Schwellenwert erreicht 104, erfolgt die Auswahl, ob das Verfahren entlang eines ersten Pfades 205 oder entlang eines zweiten Pfades 206 weitergeführt wird.
Wenn der Standardfehler noch oberhalb des vorgegebenen Schwellenwerts liegt, wird das Verfahren entlang des ersten Pfades 205 weiterverfolgt, es werden nämlich zusätzliche Zeitdifferenzen erfasst und erneut der Mittelwert bzw. der Standardfehler berechnet. Das Verfahren wird in dieser Schleife so lange durchgeführt, bis der Standardfehler den vorgegebenen Schwellenwert unterschreitet. Sobald der Schwellenwert durch den Standardfehler unterschritten wird, wird das Verfahren entlang des zweiten Pfades 206 weiterverfolgt, nämlich nachfolgend der zu dem entsprechenden Standardfehler gehörende Mittelwert als Kenngröße 108 herangezogen. Mit diesem Mittelwert als Kenngröße lassen sich die Messwerte für den Massendurchfluss des für die Erfassung der Zeitdifferenzen herangezogenen Coriolis-Massedurchflussmessgeräts korrigieren.

Der Massedurchfluss m in einem Coriolis-Massedurchflussmessgerät steht grundsätzlich über nachfolgenden Zusammenhang in einem unmittelbaren Verhältnis zu der aus der Phasenverschiebung ermittelten Zeitdifferenz zwischen den beiden Messwertaufnehmern:

$$\dot{m} = K_R\left(\Delta t_{0i} - \bar{t}_0\right), \qquad (Gl.\ 5)$$

wobei $K_R$ ein Kalibrierungsfaktor, $\Delta t_{0i}$ die aktuelle Zeitdifferenz im laufenden Betrieb zwischen korrespondierenden Bereichen des Messrohrs - einbau- und ausbauseitig - zu einem bestimmten Zeitpunkt und $\bar{t}_0$ der als Kenngröße mit dem Verfahren ermittelte Mittelwert der Zeitdifferenzen bei Nulldurchfluss ist.

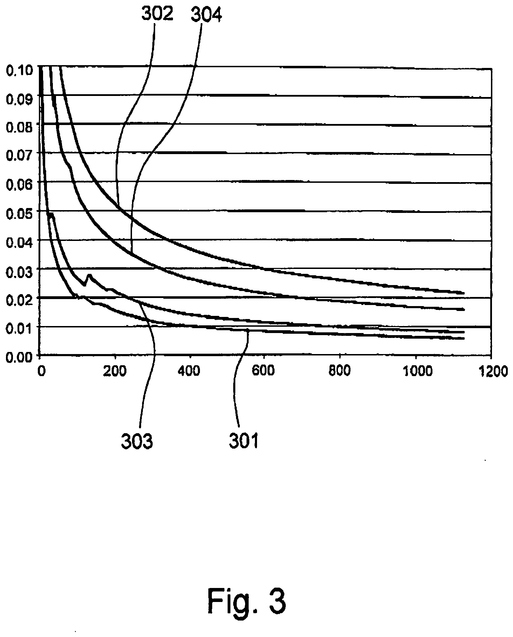

Fig. 3 zeigt ein Diagramm, in dem der Standardfehler auf der Ordinate und die Anzahl der ermittelten Werte, hier der ermittelten Zeitdifferenzen, auf der Abszisse aufgetragen ist. Die Kurvenverläufe 301, 302, 303 und 304 zeigen den Verlauf des Standardfehlers in Abhängigkeit der für die Berechnung verwendeten Zeitdifferenzen für vier verschiedene Betriebs- und Einbausituationen.

Dem Diagramm in Fig. 3 ist zu entnehmen, dass um unterhalb von einem Standardfehler von 0,02 zu gelangen, in einer ersten Einbausituation 301 wesentlich weniger Zeitdifferenzen ermittelt und für die Berechnung verwendet werden müssen, als beispielsweise in einer Einbausituation 302. So müssen beispielsweise für die erste Einbausituation etwa eine Anzahl von 150 Zeitdifferenzen erfasst werden, um auf einen Standardfehler von unterhalb von 0,02 zu gelangen, während für die Einbausituation 302 dafür mehr als 1100 Zeitdifferenzen erfasst werden müssen. Der Vorteil des Verfahrens besteht nun darin, dass sich der Aufwand für die Ermittlung der Kenngröße bzw. des Mittelwerts an der individuellen Betriebs- und Einbausituation orientiert, nämlich beispielsweise für eine Einbausituation wesentlich früher beendet werden kann als für die andere, da sich das Verfahren zur Ermittlung der Kenngröße durch die Bewertung des berechneten Lageparameters über den Streuungsparameter an die Betriebs- bzw. Einbausituation anpasst.

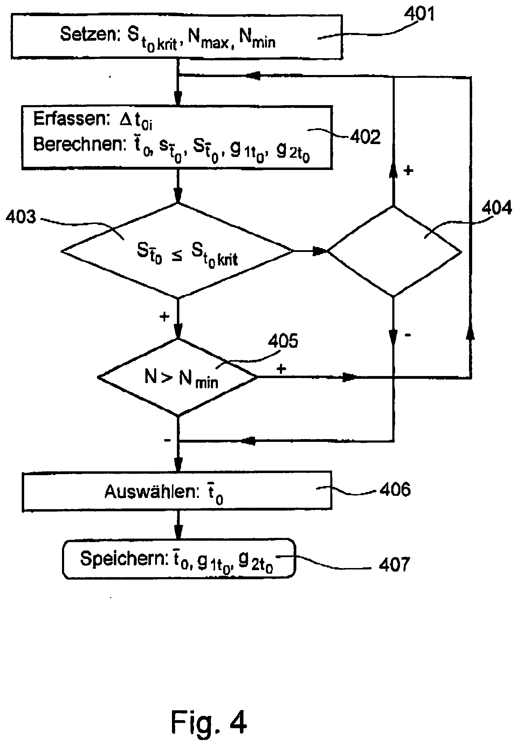

Fig. 4 zeigt ein Ablaufdiagramm für ein weiteres Ausführungsbeispiel eines Verfahrens zur Ermittlung mindestens einer Kenngröße für die Korrektur von Messwerten eines Coriolis-Massedurchflussmessgeräts. Zu Beginn des Verfahrens erfolgt zunächst das Setzen des Schwellenwerts $S_{t_0,krit}$", der maximalen Anzahl $N_{max}$ an zu ermittelnden Zeitdifferenzen und der minimalen Anzahl $N_{min}$ an Zeitdifferenzen 401. Der Schwellenwert $S_{t_0 kril}$ dient als Auswahlkriterium. Die Maximalanzahl $N_{max}$ an Zeitdifferenzen und die Minimalanzahl $N_{min}$ geben quantitative Abbruchkriterien an, nämlich nach welcher maximalen Anzahl an ermittelten Zeitdifferenzen das Verfahren in jedem Fall abgebrochen wird, auch wenn der Schwellenwert noch nicht unterschritten ist und bis zu welcher Mindestanzahl an zu erfassenden Zeitdifferenzen, Zeitdifferenzen ermittelt werden müssen, bevor das Verfahren beendet wird, auch wenn vorher schon der Schwellenwert unterschritten worden ist.

Nach dem Setzen der genannten Größen erfolgt das Erfassen der einzelnen Zeitdifferenzen $\Delta t_{oi}$, das Berechnen der Standardabweichung $s_{\bar{t}_0}$, des Standardfehlers $S_{\bar{t}_0}$, der Schiefe $g_{1,0}$ und der Wölbung $g_{2f_o}$ 402. Anschließend wird der berechnete Standardfehler mit dem Schwellenwert als Auswahlkriterium verglichen 403.

Wenn der berechnete Standardfehler nicht unterhalb des Schwellenwerts liegt, wird als nächster Verfahrensschritt kontrolliert, ob die tatsächliche Anzahl an ermittelten Zeitdifferenzen kleiner ist als die Maximalanzahl an Zeitdifferenzen. Wenn die tatsächliche Anzahl geringer ist als die Maximalanzahl, wird das Verfahren mit dem erneuten Erfassen von Zeitdifferenzen und dem erneuten Berechnen 402 fortgesetzt.

Für den Fall, dass die tatsächliche Anzahl an erfassten Zeitdifferenzen größer ist als die Maximalanzahl, wird das Verfahren an dieser Stelle beendet und der zu diesem Zeitpunkt ermittelte Mittelwert der Zeitdifferenzen wird als Kenngröße ausgewählt 406 und anschließend zusammen mit der ermittelten Schiefe und der ermittelten Wölbung zur Korrektur der Messwerte des Coriolis-Massedurchflussmessgeräts gespeichert 407.

Für den Fall, dass der tatsächliche Standardfehler beim Vergleich mit dem Schwellenwert 403 geringer ist als der Schwellenwert, wird als nächster Verfahrensschritt kontrolliert, ob die tatsächliche Anzahl an ermittelten Zeitdifferenzen größer ist als die Minimalanzahl an zu ermittelnden Zeitdifferenzen 405. Ist die tatsächliche Anzahl an erfassten Zeitdifferenzen geringer als die Minimalanzahl an Zeitdifferenzen, wird das Verfahren mit dem erneuten Erfassen von zusätzlichen Zeitdifferenzen und dem Berechnen des Mittelwerts und des Standardfehlers fortgesetzt 402.

Ist die tatsächliche Anzahl an erfassten Zeitdifferenzen größer als die Minimalanzahl an zu erfassenden Zeitdifferenzen, wird das Verfahren mit dem Auswählen des berechneten Mittelwerts als Kenngröße 406 zur Korrektur der Messwerte des Coriolis-Massedurchflussmessgeräts fortgesetzt und anschließend die Kenngröße, die berechnete Schiefe und die berechnete Wölbung gespeichert und für die Korrektur der Messwerte für den Massendurchfluss herangezogen.

**Patentansprüche**

1. Verfahren zur Ermittlung mindestens einer Kenngröße für die Korrektur von Messwerten eines Coriolis-Massedurchflussmessgeräts, mit mindestens einem Messrohr, mindestens zwei Messwertaufnehmern und mindestens einem Aktuator, wobei das Messrohr mit dem Aktuator zu wenigstens einer Schwingung anregbar ist, umfassend:

   - Erfassen von Werten einer Messgröße bei konstantem Durchfluss mit den Messwertaufnehmern (101, 201),
   - Berechnen mindestens eines Lageparameters aus den erfassten Werten, wobei der Lageparameter ein Mittelwert (202) ist (102, 202),
   - Berechnen mindestens eines Streuungsparameters aus den erfassten Werten und dem Lageparameter, wobei der Streuungsparameter der Standardfehler (203) des Mittelwertes ist (103),
   - wobei das Erfassen zusätzlicher Werte und das Berechnen von Mittelwert und Standardfehler des Mittelwertes aus den vorhandenen und zusätzlichen Werten so häufig durchgeführt wird, bis der Standardfehler des Mittelwertes als Auswahlkriterium einen Schwellenwert unterschreitet (104, 204), und
   - wobei dann der zu dem Standardfehler des Mittelwertes korrespondierende Mittelwert als Kenngröße für die Korrektur der Messwerte des Coriolis-Massedurchflussmessgeräts herangezogen wird (107, 207).

2. Verfahren nach Anspruch 2, **dadurch gekennzeichnet, dass** die Messgröße eine Zeitdifferenz ist, insbesondere eine erfasste Zeitdifferenz zwischen mit den beiden Messwertaufnehmern erfassten Schwingungen des Messrohrs.

3. Verfahren nach Anspruch 1 oder 2, **dadurch gekennzeichnet, dass** der konstante Durchfluss ein Nulldurchfluss ist.

4. Verfahren nach einem der Ansprüche 1 bis 3, **dadurch gekennzeichnet, dass** eine maximale Anzahl an Iterationsschritten des Verfahrens vorgegeben ist, insbesondere die Anzahl an Iterationsschritten durch eine maximale Anzahl an Messwerten beschränkt ist, und dass das Verfahren bei der maximalen Anzahl an Iterationsschritten beendet und der zuletzt ermittelte Lageparameter als Kenngröße herangezogen wird.

5. Verfahren nach einem der Ansprüche 1 bis 4, **dadurch gekennzeichnet, dass** eine minimale Anzahl an Iterationsschritten des Verfahrens vorgegeben ist, insbesondere die Anzahl an Iterationsschritten durch eine minimale Anzahl an Messwerten beschränkt ist.

6. Verfahren nach einem der Ansprüche 1 bis 5, **dadurch gekennzeichnet, dass** zusätzlich ein Berechnen der Schiefe der Messwerte erfolgt, wobei die Schiefe ein Maß fiir die Häufigkeit der positiven oder negativen Abweichung der Gesamtheit der Werte vom Lageparameter ist, und dass die Schiefe zusätzlich als Auswahlkriterium für die Kenngröße herangezogen wird.

7. Verfahren nach einem der Ansprüche 1 bis 6, **dadurch gekennzeichnet, dass** zusätzlich ein Berechnen der Wölbung der Messwerte erfolgt, wobei die Wölbung ein Maß für die Abweichung der Gesamtheit der Werte von der Normalverteilung ist und dass die Wölbung zusätzlich als Auswahlkriterium für die Kenngröße herangezogen wird.

**Claims**

1. Method for determining at least one characteristic for the correction of measurements of a Coriolis mass flowmeter having at least one measuring tube, at least two sensors and at least one actuator, wherein the measuring tube can be excited to at least one oscillation by the actuator, including:

   - detecting values of a measurand during constant flow with the sensors (101, 201),
   - calculating at least one location parameter from the detected values, wherein the location parameter is a mean (102, 202),
   - calculating at least one dispersion parameter from the detected values and the location parameter, wherein the dispersion parameter is the standard deviation of the mean (203, 103),
   - wherein the detection of additional values and the calculation of location parameter and dispersion parameter from the existing and additional values is carried out so often until the dispersion parameter as selection criterion reaches a threshold value (104, 204), and
   - wherein, then, the location parameter corresponding to the dispersion parameter is used as characteristic for the correction of the measurements of the Coriolis mass flowmeter (107, 207).

**2.** Method according to claim 1, **characterized in that** the measurand is a time difference, in particular a detected time difference between oscillations of the measuring tube detected with both sensors.

**3.** Method according to claim 1 or 2, **characterized in that** the constant flow is zero flow.

**4.** Method according to any one of claims 1 to 3, **characterized in that** a maximum number of iteration steps of the method is pre-determined, in particular, the number of iteration steps is limited by a maximum number of measurements, and that the method is ended at the maximum number of iteration steps and the last determined location parameter is used as the characteristic.

**5.** Method according to any one of claims 1 to 4, **characterized in that** a minimum number of iteration steps of the method is pre-determined, in particular, the number of iteration steps is limited by a minimum number of measurements.

**6.** Method according to any one of claims 1 to 5, **characterized in that** additionally a calculation of the skewness of the measurements occurs, wherein the skewness is a degree for the frequency of positive or negative deviations of the entirety of values from the location parameter, and that the skewness is additionally used as a selection criteria for the characteristic.

**7.** Method according to any one of claims 1 to 6, **characterized in that** additionally a calculation of the kurtosis of the measurements occurs, wherein the kurtosis is a degree for the deviation of the entirety of the values from normal distribution and that kurtosis is used as a selection criteria for the characteristic.

**Revendications**

**1.** Procédé de détermination d'au moins une grandeur caractéristique pour la correction de valeurs mesurées d'un débitmètre massique Coriolis, comprenant au moins un tube de mesure, au moins deux transducteurs de mesure et au moins un actionneur, le tube de mesure pouvant être excité en au moins une oscillation par l'actionneur, comprenant :

- l'acquisition de valeurs d'une grandeur de mesure à un débit constant avec les transducteurs de mesure (101, 201),
- le calcul d'au moins un paramètre de position à partir des valeurs acquises, le paramètre de position étant une valeur moyenne (202) (102, 202),
- le calcul d'au moins un paramètre de dispersion à partir des valeurs acquises et du paramètre de position, le paramètre de dispersion étant l'erreur-type (203) de la valeur moyenne (103),
- l'acquisition de valeurs supplémentaires et le calcul de la valeur moyenne et de l'erreur-type de la valeur moyenne à partir des valeurs présentes et supplémentaires étant effectués aussi souvent que nécessaire jusqu'à ce que l'erreur-type de la valeur moyenne, en tant que critère de sélection, devienne inférieure à une valeur de seuil (104, 204) et
- la valeur moyenne qui correspond à l'erreur-type de la valeur moyenne étant alors utilisée comme grandeur caractéristique pour la correction des valeurs mesurées du débitmètre massique Coriolis (107, 207).

**2.** Procédé selon la revendication 2, **caractérisé en ce que** la grandeur de mesure est une différence de temps, notamment une différence de temps détectée entre les oscillations du tube de mesure détectées avec les deux transducteurs de mesure.

**3.** Procédé selon la revendication 1 ou 2, **caractérisé en ce que** le débit constant est un débit nul.

**4.** Procédé selon l'une des revendications 1 à 3, **caractérisé en ce qu'**un nombre maximal d'étapes d'itération du procédé est prédéfini, le nombre d'étapes d'itération étant notamment limité par un nombre maximal de valeurs mesurées, et **en ce que** le procédé se termine au nombre maximal d'étapes d'itération et le dernier paramètre de position déterminé est utilisé comme grandeur caractéristique.

**5.** Procédé selon l'une des revendications 1 à 4, **caractérisé en ce qu'**un nombre minimal d'étapes d'itération du procédé est prédéfini, le nombre d'étapes d'itération étant notamment limité par un nombre minimal de valeurs mesurées.

**6.** Procédé selon l'une des revendications 1 à 5, **caractérisé en ce qu'**un calcul d'une dissymétrie des valeurs mesurées est en plus effectué, la dissymétrie étant une indication de la fréquence de l'écart positif ou négatif de l'ensemble des valeurs par rapport au paramètre de position, et **en ce que** la dissymétrie est en plus utilisée comme critère de sélection pour la grandeur caractéristique.

**7.** Procédé selon l'une des revendications 1 à 6, **caractérisé en ce qu'**un calcul d'une inflexion de courbe des valeurs mesurées est en plus effectué, l'inflexion de courbe étant une indication de l'écart de l'ensemble des valeurs par rapport à la distribution normale et **en ce que** l'inflexion de courbe est en plus utilisée comme critère de sélection pour la grandeur caractéristique.

101 — Erfassen
Werte

102 — Berechnen
Lageparameter

103 — Berechnen
Streuungsparameter

—105

104 — Auswahlkriterium:
Streuungsparameter
erreicht Schwellenwert

106 —

107 — Lageparameter als
Kenngröße

# Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- US 20060287839 A1
- US 5228327 A